# EUROPÄISCHE PATENTSCHRIFT

(11) **EP 2 039 552 B1**
(45) Veröffentlichungstag und Bekanntmachung des Hinweises auf die Patenterteilung: **10.11.2010**
(21) Anmeldenummer: 08015413.1
(22) Anmeldetag: 01.09.2008
(51) Int. Cl.: B60J 7/12

(54) **Faltverdeck für ein Cabriolet-Fahrzeug**
Folding covering for a convertible vehicle
Capote pliante pour un véhicule cabriolet

(30) Priorität: 20.09.2007 DE 102007044943
(43) Veröffentlichungstag der Anmeldung: 25.03.2009
(73) Patentinhaber: Webasto AG, 82131 Stockdorf (DE)
(72) Erfinder: Dietl, Rudolf, 81247, München (DE)
(74) Vertreter: advotec.

(56) Entgegenhaltungen:
- DE-A1- 19 613 356
- DE-A1-102006 009 264
- DE-A1-102006 059 579

## Beschreibung

Die Erfindung betrifft ein Faltverdeck für ein Cabriolet-Fahrzeug nach dem Oberbegriff des Patentanspruchs 1.

Ein derartiges Faltverdeck ist beispielsweise aus der DE 10 2006 009 264 A1 oder DE 101 60 240 B4 bekannt und mit einem Verdeckstoff und einem Verdeckgestänge versehen, das mittels einer Antriebseinrichtung betätigbar ist, so dass das Verdeck in einer Schließstellung einen Fahrzeuginnenraum überspannt und in einer Öffnungsstellung den Fahrzeuginnenraum freigibt und in einem heckseitigen Verdeckablagekasten angeordnet ist. Das Verdeckgestänge dieses Faltverdecks umfasst beidseits spiegelsymmetrisch zueinander angeordnet jeweils eine Verdeckkinematik mit einem angetriebenen Hauptlenker und einer Hauptsäule. Der Hauptlenker und die Hauptsäule sind an einem im Bereich des Verdeckablagekastens angeordneten Hauptlager schwenkbar gelagert und jeweils gelenkig mit einem mittleren Rahmenteil für den Verdeckstoff verbunden. Der Hauptlenker bildet ein hinteres Rahmenteil. Über einen Zwischenlenker und zwei Frontspriegellenker ist des Weiteren an die Verdeckkinematik ein Frontspriegel angebunden, der in Schließstellung des Verdecks an einen oberen Querholm bzw. einen Windlauf einer Windschutzscheibe des betreffenden Kraftfahrzeugs grenzt und an seinen seitlichen Rändern jeweils ein vorderes Rahmenteil aufweist. Beim Öffnen des Verdecks führt der Verdeckstoff zur Ablage in den heckseitigen Verdeckkasten eine sogenannte Z-Faltung aus, d. h. die Oberseite des Verdeckspriegels bleibt auch in Öffnungsstellung des Verdecks oben angeordnet und der Verdeckstoff wird beim Öffnen in zwei Bereichen gefaltet.

Bei dem aus der DE 101 60 240 B4 bekannten Verdeckgestänge handelt es sich um eine Zehngelenkkinematik mit drei in einfacher Weise gekoppelten Teil-Viergelenken. Durch die einfache Kopplung ergeben sich ungünstige Betätigungsgeschwindigkeiten in der Endlage, insbesondere in der kurz vor Erreichen der Schließstellung erreichten Streckstellung, wodurch gegebenenfalls unzureichende Spannkräfte resultieren. Des Weiteren ist der Bahnverlauf des Frontspriegels beim Öffnen bzw. Schließen des Verdecks hoch, was beispielsweise im Falle der Betätigung in einer niedrigen Garage nachteilig sein kann.

Der Erfindung liegt die Aufgabe zugrunde, ein Faltverdeck der einleitend genannten Gattung zu schaffen, bei dem eine optimierte Bewegungsbahn eines Frontspriegels sowie optimierte Schließkräfte beim Öffnen bzw. Schließen des Verdecks realisiert werden können.

Diese Aufgabe ist erfindungsgemäß durch das Faltverdeck mit den Merkmalen des Patentanspruchs 1 gelöst.

Erfindungsgemäß wird mithin ein Faltverdeck für ein Cabriolet-Fahrzeug vorgeschlagen, das einen Verdeckstoff und ein Verdeckgestänge umfasst, das beidseits mit einem an einem Hauptlager gelagerten Hauptlenker versehen ist, an dem ein sich in Schließstellung des Verdecks im Wesentlichen in Fahrzeuglängsrichtung erstreckendes Rahmenteil und ein Zwischenlenker angelenkt sind, wobei ein vorderes, starres Verdeckelement über einen ersten Verdeckelementlenker mit dem Zwischenlenker und über einen zweiten Verdeckelementlenker mit dem Rahmenteil verbunden ist. An dem Verdeckgestänge sind Mittel vorgesehen, die im Bewegungsablauf des Verdecks von einer Ablagestellung zu der Schließstellung eine kontinuierliche Verlangsamung des vorderen, starren Verdeckelements bewirken, und die derart ausgelegt sind, dass zwischen dem Rahmenteil und dem Zwischenlenker ein Führungslenker angeordnet ist und zwischen dem Zwischenlenker und/oder dem Führungslenker einerseits und dem ersten und/oder dem zweiten Verdeckelementlenker andererseits ein durch mindestens zwei Gelenkpunkte definiertes Koppelelement angeordnet ist.

Durch eine derartige Auslegung können wiederum die in Strecklage des Verdecks erforderlichen Schließkräfte realisiert werden.

Durch die Integration des Koppelelementes und des Zwischenlenkers in die Verdeckkinematik ist es möglich, insbesondere beim Schließen des Verdecks im Bereich der vorderen Endlage bzw. kurz vor Erreichen der vorderen Endlage eine verlangsamte Bewegung des vorderen Verdeckelementes zu realisieren, wodurch wiederum die in Strecklage des Verdecks erforderlichen Schließkräfte realisiert werden können. Im Bereich des vorderen Verschlusses des Faltverdecks kann mithin bei dem Faltverdeck nach der Erfindung die Schließgeschwindigkeit verzögert werden. Des Weiteren ist es möglich, eine niedrige Aushebekurve des vorderen Verdeckelementes beim Öffnen oder Schließen des Verdecks zu realisieren, was sich insbesondere beim Betätigen des Verdecks in niedrigen Räumen bzw. Garagen als positiv erweist. Auch im Falle einer Betätigung des Verdecks während einer Langsamfahrt des betreffenden Fahrzeugs erweist sich eine niedrige Aushebekurve als positiv, da somit das Verdeck eine geringere Angriffsfläche für Fahrtwind liefert.

Bei einer speziellen Ausführungsform des Faltverdecks nach der Erfindung ist das vordere Verdeckelement ein Frontspriegel, der in Schließstellung des Verdecks an A-Säulen eines Fahrzeugaufbaus grenzt. Denkbar ist es natürlich auch, dass das vordere Verdeckelement ein zwei Gelenkpunkte verbindender Lenker ist und ein Frontspriegel des Verdecks an einen der Verdeckelementlenker angebunden ist bzw. diesen bildet.

Das Koppelelement, das die Bewegung des Zwischenlenkers oder des Führungslenkers in eine Schwenkbewegung des vorderen Verdeckelementes umsetzt, kann ein Lenkerelement, ein Exzenterelement oder dergleichen sein. Beispielsweise ist das Koppelelement als kurzer Kniehebel oder Exzenterbolzen ausgebildet. Denkbar ist es auch, dass das Koppelelement als Steckachse ausgebildet ist, die die betreffenden beiden Lenker miteinander verbindet. In diesem Falle fallen die beiden Gelenkpunkte bzw. Schwenkachsen des Koppelelements zusammen.

Bei einer bevorzugten Ausführungsform des Faltverdecks nach der Erfindung ist das Koppelelement zwischen dem Zwischenlenker und einem der Verdeckelementlenker angeordnet. Diese Ausführungsform ist technisch einfach realisierbar.

Wie üblich, kann das Rahmenteil über ein Gelenk mit einer an dem Hauptlager schwenkbar gelagerten Hauptsäule verbunden sein, die zusammen mit dem Hauptlenker Bestandteil eines Hauptviergelenks ist, nicht angetrieben ist und die Bewegung des Verdeckgestänges führt.

Der erste Verdeckelementlenker ist insbesondere ein bezogen auf den Fahrzeugaufbau vorderer Lenker, wohingegen der zweite Verdeckelementlenker ein bezogen auf den Fahrzeugaufbau hinterer Lenker ist.

Das Faltverdeck nach der Erfindung umfasst in der Regel beidseits drei Rahmenteile, nämlich ein vorderes, ein mittleres und ein hinteres Rahmenteil. Das vordere Rahmenteil kann insbesondere an dem vorderen Verdeckelement ausgebildet sein, welches einen Frontspriegel bzw. eine Dachspitze darstellen kann. Das mittlere Rahmenteil ist das Rahmenteil, das an den Hauptlenker angelenkt ist. Das hintere Rahmenteil kann von dem Hauptlenker selbst gebildet oder an diesem ausgebildet sein. Bei einer alternativen Ausführungsform kann das hintere Rahmenteil aber auch von der Hauptsäule gebildet sein. An den Rahmenteilen sind üblicherweise Dichtungen zu den Seitenfenstern des betreffenden Kraftfahrzeugs angeordnet.

Weitere Vorteile und vorteilhafte Ausgestaltungen des Faltverdecks nach der Erfindung sind der Beschreibung, der Zeichnung und den Patentansprüchen entnehmbar.

Ein bevorzugtes Ausführungsbeispiel des Faltverdecks nach der Erfindung ist in der Zeichnung schematisch vereinfacht dargestellt und wird in der nachfolgenden Beschreibung näher erläutert. Es zeigt
- Fig. 1: eine Seitenansicht eines Faltverdecks nach der Erfindung in Schließstellung;
- Fig. 2: eine vergrößerte Darstellung eines Verdeckgestängebereichs, in der eine Bewegungsbahn eines Frontspriegels dargestellt ist;
- Fig. 3: eine erste Zwischenstellung eines Verdeckgestänges des Faltverdecks nach Fig. 1;
- Fig. 4: eine zweite Zwischenstellung des Verdeckgestänges;
- Fig. 5: eine Öffnungsstellung des Verdeckgestänges; und
- Fig. 6: ein Diagramm, in dem der Schrittweitenverlauf beim Schließen des Verdecks bei einem Faltverdeck nach der Erfindung und einem Faltverdeck nach dem Stand der Technik gegenübergestellt sind.

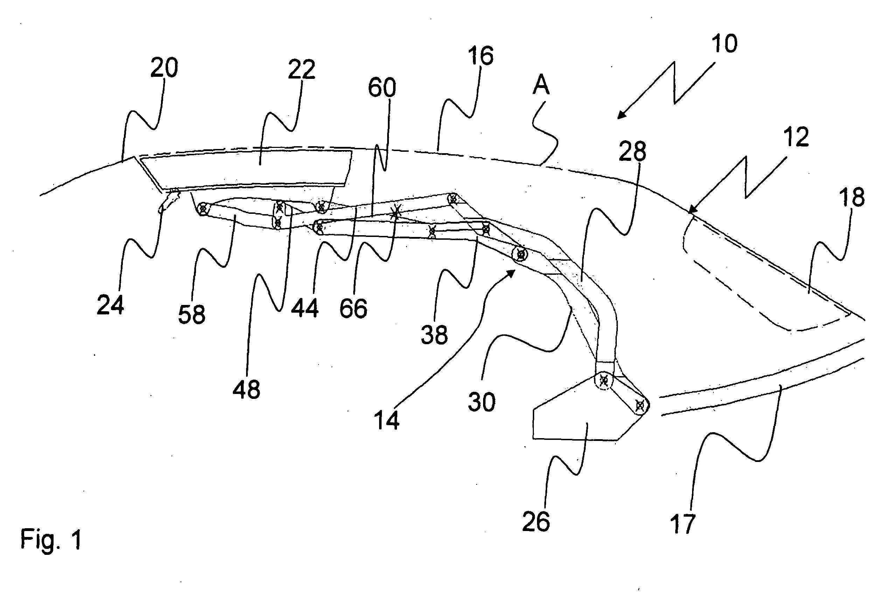

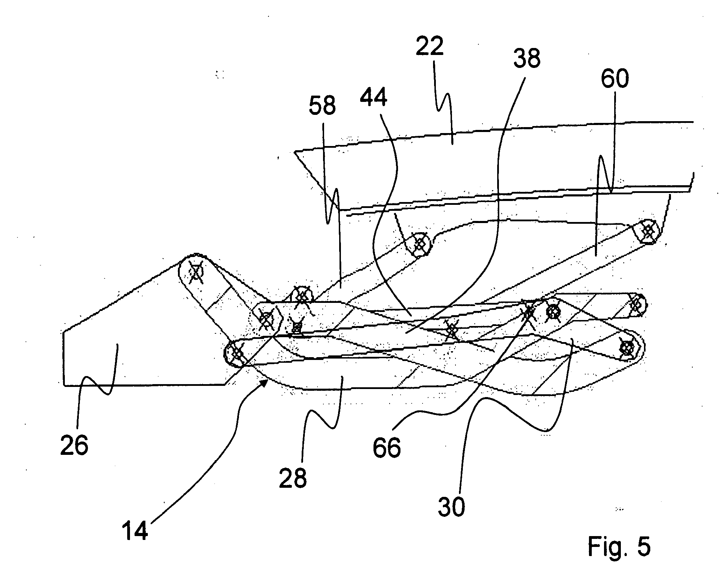

In Fig. 1 ist eine stark schematisierte ausschnittsweise Seitenansicht eines als Cabriolet ausgebildeten Kraftfahrzeugs 10 dargestellt, das mit einem Faltverdeck 12 versehen ist, welches zwischen einer in Fig. 1 dargestellten, einen Fahrzeuginnenraum überdeckenden Schließstellung und einer in Fig. 5 hinsichtlich eines Verdeckgestänges 14 dargestellten Öffnungsstellung betätigt werden kann. Weitere Zwischenspriegel zur Formgebung des Verdecks in Schließstellung sind vorliegend nicht dargestellt.

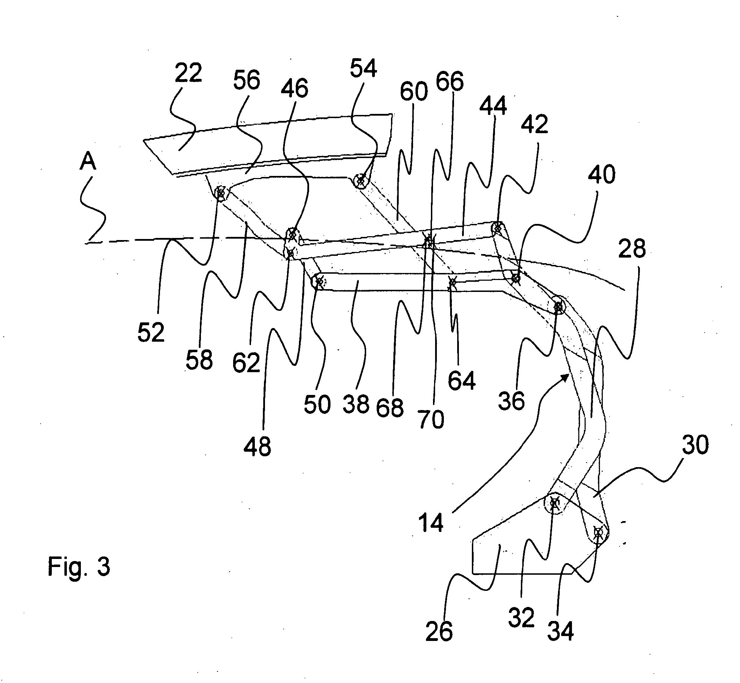

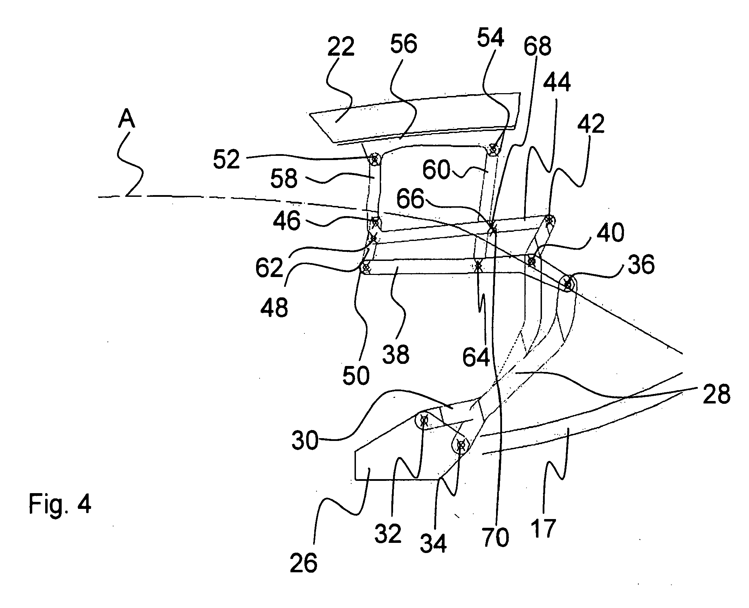

Das Faltverdeck 12 umfasst neben dem Verdeckgestänge 14 einen Verdeckstoff 16, der in seinem heckseitigen Bereich mit einem Heckfenster 18 versehen ist und in der in Fig. 1 dargestellten Schließstellung von dem Verdeckgestänge 14 zwischen einem hinteren Spannbügel 17 und einem vorderen Windlauf 20 des Fahrzeugaufbaus aufgespannt ist und einen Strakverlauf A hat, der auch in den Zwischenstellungen des Verdecks zeigenden Figuren 3 und 4 der Veranschaulichung halber dargestellt ist. In seinem an den vorderen Windlauf 20 angrenzenden Bereich umfasst das Verdeck 12 bzw. das Verdeckgestänge 14 einen sich in Fahrzeugquerrichtung erstreckenden Frontspriegel 22, der eine Dachspitze darstellt und im Bereich des vorderen Windlaufs 20 mittels eines Riegelmechanismus 24 beispielsweise an A-Säulen des Fahrzeugaufbaus fixiert werden kann, so dass die Schließstellung des Faltverdecks 12 gesichert ist.

Das Faltverdeck 12 ist bezüglich einer Fahrzeuglängsmittelebene im Wesentlichen spiegelsymmetrisch ausgebildet. Aus diesem Grunde wird das Faltverdeck 14 im Folgenden nur anhand des in Fahrtrichtung links angeordneten Faltverdeckbereichs beschrieben. Der rechts angeordnete Faltverdeckbereich ist entsprechend ausgebildet.

Das Verdeckgestänge 14 umfasst beidseits jeweils ein Hauptlager 26, das im Bereich eines nicht näher dargestellten heckseitigen Verdeckablagekastens angeordnet ist und an dem ein mittels eines ebenfalls nicht näher dargestellten Hydraulikzylinders oder Elektromotors angetriebener Hauptlenker 28 über einen Gelenkpunkt 32 und eine Hauptsäule 30 über einen Gelenkpunkt 34 schwenkbar gelagert sind.

Über einen Gelenkpunkt 36 ist die Hauptsäule 30 mit einem einen Längsholm darstellenden, sich im Wesentlichen in Fahrzeuglängsrichtung erstreckenden mittleren Rahmenteil 38 verbunden, welcher zur Ausbildung eines von den Gelenkpunkten 32, 34, 36 und 40 aufgespannten Hauptviergelenks über einen Gelenkpunkt 40 auch mit dem Hauptlenker 28 verbunden ist. Bezogen auf den Fahrzeugaufbau liegt der Gelenkpunkt 40 vor dem heckseitig angeordneten Gelenkpunkt 36.

An dem dem Gelenkpunkt 32 abgewandten Ende weist der Hauptlenker 28 einen weiteren Gelenkpunkt 42 auf, über den ein Zwischenlenker 44 angelenkt ist, der sich ebenfalls im Wesentlichen in Fahrzeuglängsrichtung erstreckt. Der Zwischenlenker 44 ist in einem von dem Gelenkpunkt 42 abgewandten Bereich über einen Gelenkpunkt 46 mit einem Führungslenker 48 verbunden, der wiederum mit seinem dem Gelenkpunkt 46 abgewandten Ende über einen Gelenkpunkt 50 an dem dem Gelenkpunkt 36 abgewandten Ende des mittleren Rahmenteils 38 angelenkt ist.

Der sich in Fahrzeugquerrichtung erstreckende Frontspriegel 22 weist beidseits jeweils zwei Lagerpunkte 52 und 54 auf, die an einem Träger 56 ausgebildet sind und an denen ein vorderer Frontspriegellenker 58 bzw. ein hinterer Frontspriegellenker 60 angelenkt sind. Der vordere Frontspriegellenker 58 ist mit seinem dem Lagerpunkt 52 abgewandten Ende über einen Gelenkpunkt 62 im Bereich des vorderen Endes des Zwischenlenkers 44 angelenkt. Der hintere Frontspriegellenker 60 ist mit seinem dem Lagerpunkt 54 abgewandten Ende in einem mittleren Bereich des mittleren Rahmenteils 38 über einen Gelenkpunkt 64 angelenkt. Mithin weist das mittlere Rahmenteil vier Gelenkpunkte 36, 40, 50 und 64 auf. Die Gelenkpunkte 40, 42, 46 und 50 bilden ein zweites Viergelenk.

Des Weiteren ist zwischen dem Zwischenlenker 44 und dem hinteren Lenker 60 ein Koppelelement 66 ausgebildet, das im vorliegenden Fall ein Excenterelement ist, das einerseits über einen Gelenkpunkt 68 an dem hinteren Lenker 60 und andererseits über einen Gelenkpunkt 70 an dem Zwischenlenker 44 angelenkt ist.

Ein hinteres Rahmenteil wird im vorliegenden Fall von dem Hauptlenker 28 gebildet. Ein vorderes Rahmenteil ist entlang des seitlichen Randes des Frontspriegels 22 ausgebildet. In der in Fig. 1 dargestellten Schließstellung fluchten das vordere Rahmenteil, das mittlere Rahmenteil und das hintere Rahmenteil miteinander.

Die vorstehend beschriebene Kinematik stellt eine 13-Gelenk-Mechanik dar, bei der durch an die jeweiligen Anforderungen angepasste Lenkerlängen und Gelenkpunktlagen stets günstige Öffnungs- und Schließkräfte realisiert werden können.

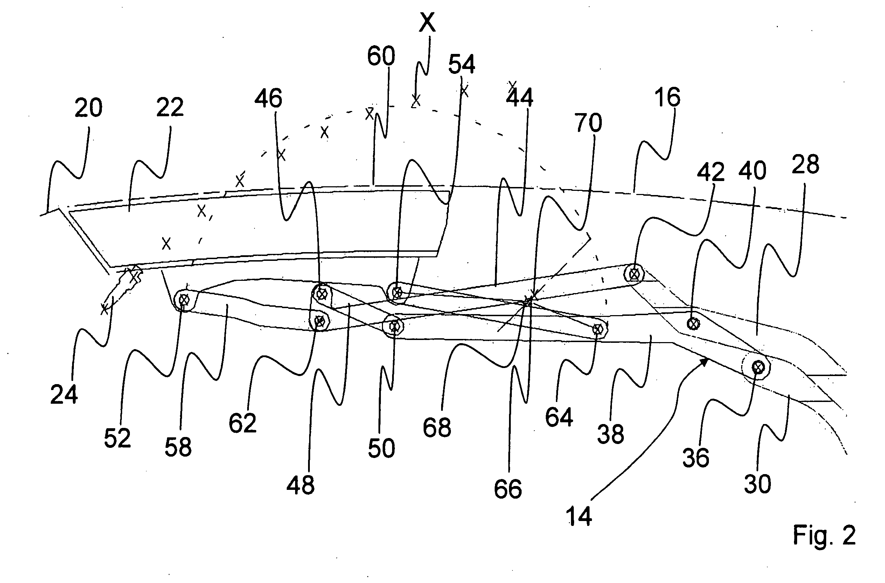

Insbesondere ist es durch die vorstehend beschriebene Ausführung möglich, dass der Frontspriegel 22 bei Betätigung des Faltverdecks 12 eine niedrige bzw. flache, in Fig. 2 durch Kreuze X dargestellte Bewegungsbahn ausführt. Des Weiteren ist es möglich, dass durch die entsprechenden Übersetzungsverhältnisse hinsichtlich Kopplung der verschiedenen genannten Teilviergelenke mit den wie vorstehend beschrieben angebundenen Lenkern die Bewegungsgeschwindigkeit des Frontspriegels 22 bei Erreichen der in Fig. 1 dargestellten Strecklage des Faltverdecks 12 verlangsamt wird und die eingeleiteten Spann- bzw. Schließkräfte hinreichend groß sind, um das Faltverdeck 12 in günstiger Weise an dem Riegelmechanismus 24 zu verriegeln und damit die Schließstellung des Faltverdecks 12 zu sichern.

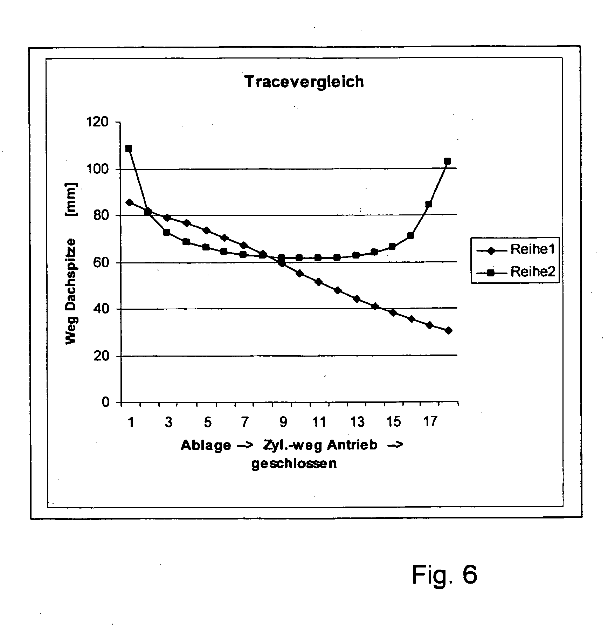

In Fig. 6 ist ein so genannter Traceverlauf für ein Faltverdeck nach der Erfindung (Reihe 1) und für ein Faltverdeck nach dem Stand der Technik (Reihe 2) dargestellt. Hierbei ist jeweils der Weg der Dachspitze bzw. des Frontspriegels gegen die zwischen der Öffnungs- bzw. Ablagestellung und der Schließstellung des jeweiligen Faltverdecks ausgeführten Schritte dargestellt. Wie dem Diagramm und der nachstehenden Tabelle, die die in dem Diagramm aufgetragenen beispielhaften Werte enthält, zu entnehmen ist, nimmt die Schrittweite bei dem Faltverdeck nach der Erfindung stetig weiter ab, d. h. der Schließvorgang verlangsamt sich, so dass die zum Schließen des Faltverdecks erforderlichen Spann- bzw. Schließkräfte durch die so resultierende Übersetzung gegenüber dem Faltverdeck nach dem Stand der Technik verringert sind. Bei diesem nehmen die Schrittweite und damit die Schließgeschwindigkeit kurz vor Erreichen der Schließstellung der Dachspitze drastisch zu.

**Tabelle:**

| **Schritt** | **Weg Dachspitze (mm) Erfindung** | **Weg dachspitze (mm) St. d. T.** |
|---|---|---|
| 1 | 85,69 | 108,5 |
| 2 | 82,06 | 80,84 |
| 3 | 79,24 | 72,87 |
| 4 | 76,57 | 68,64 |
| 5 | 73,71 | 66,02 |
| 6 | 70,54 | 64,3 |
| 7 | 67,03 | 63,12 |
| 8 | 63,25 | 62,33 |
| 9 | 59,32 | 61,8 |
| 10 | 55,36 | 61,8 |
| 11 | 51,47 | 61,6 |
| 12 | 47,75 | 61,8 |
| 13 | 44,26 | 62,5 |
| 14 | 41,03 | 63,7 |
| 15 | 38,06 | 66,1 |
| 16 | 35,36 | 71,01 |
| 17 | 32,87 | 84,11 |
| 18 | 30,52 | 102,42 |

Bei der in den Figuren 1 bis 5 dargestellten Ausführungsform führt der Verdeckstoff beim Öffnen eine so genannte rotatorische Z-Faltung aus, d. h. der Frontspriegel behält während des Öffnungsvorgangs im Wesentlichen seine Ausrichtung und der Verdeckstoff wird in zwei Bereichen gefaltet. Alternativ ist es aber auch denkbar, dass ein Frontspriegel beispielsweise an dem vorderen Lenker 58 befestigt ist oder diesen ersetzt und beim Öffnen des Faltverdecks eine Schwenkbewegung ausführt, so dass dessen Unterseite in Ablagestellung nach oben weist. Bei einer derartigen Ausführungsform führt der Verdeckstoff eine sogenannte K-Faltung aus.

### Bezugszeichen

- 10: Kraftfahrzeug
- 12: Faltverdeck
- 14: Verdeckgestänge
- 16: Verdeckstoff
- 17: Spannbügel
- 18: Heckfenster
- 20: vorderer Windlauf
- 22: Frontspriegel
- 24: Riegelmechanismus
- 26: Hauptlager
- 28: Hauptlenker
- 30: Hauptsäule
- 32: Gelenkpunkt
- 34: Gelenkpunkt
- 36: Gelenkpunkt
- 38: Rahmenteil
- 40: Gelenkpunkt
- 42: Gelenkpunkt
- 44: Zwischenlenker
- 46: Gelenkpunkt
- 48: Führungslenker
- 50: Gelenkpunkt
- 52: Lagerpunkt
- 54: Lagerpunkt
- 56: Träger
- 58: vorderer Frontspriegellenker
- 60: hinterer Frontspriegellenker
- 62: Gelenkpunkt
- 64: Gelenkpunkt
- 66: Koppelelement
- 68: Gelenkpunkt
- 70: Gelenkpunkt

## Patentansprüche

1. Faltverdeck für ein Cabriolet-Fahrzeug, umfassend einen Verdeckstoff (16) und ein Verdeckgestänge (14), das beidseits mit einem an einem Hauptlager (26) gelagerten Hauptlenker (28) versehen ist, an dem ein sich in Schließstellung des Verdecks im Wesentlichen in Fahrzeuglängsrichtung erstreckendes Rahmenteil (38) und ein Zwischenlenker (44) angelenkt sind, wobei ein vorderes, starres Verdeckelement (22) über einen ersten Verdeckelementlenker (58) mit dem Zwischenlenker (44) und über einen zweiten Verdeckelementlenker (60) mit dem Rahmenteil (38) verbunden ist, **dadurch gekennzeichnet, dass** an dem Verdeckgestänge (14) Mittel vorgesehen sind, die im Bewegungsablauf des Verdecks von einer Ablagestellung zu der Schließstellung eine kontinuierliche Verlangsamung des vorderen, starren Verdeckelements (22) bewirken und die derart ausgelegt sind, dass zwischen dem Rahmenteil (38) und dem Zwischenlenker (44) ein Führungslenker (48) angeordnet ist und zwischen dem Zwischenlenker (44) oder dem Führungslenker (48) einerseits und dem ersten Verdeckelementlenker (58) oder dem zweiten Verdeckelementlenker (60) andererseits ein durch mindestens zwei Gelenkpunkte (68, 70) definiertes Koppelelement (66) angeordnet ist.

2. Faltverdeck nach Anspruch 1, **dadurch gekennzeichnet, dass** das Verdeckelement (22) ein Frontspriegel ist, der in Schließstellung an A-Säulen eines Fahrzeugaufbaus grenzt.

3. Faltverdeck nach Anspruch 1, **dadurch gekennzeichnet, dass** das Koppelelement (66) ein Lenkerelement, ein Exzenterelement oder dergleichen ist.

4. Faltverdeck nach Anspruch 1, **dadurch gekennzeichnet, dass** das Koppelelement (66) zwischen dem Zwischenlenker (44) und einem der Verdeckelementlenker (58, 60) angeordnet ist.

5. Faltverdeck nach einem der Ansprüche 1 bis 4, **dadurch gekennzeichnet, dass** das Rahmenteil (38) mit einer an dem Hauptlager (26) gelagerten Hauptsäule (30) verbunden ist.

6. Faltverdeck nach einem der Ansprüche 1 bis 5, **dadurch gekennzeichnet, dass** der erste Verdeckelementlenker (58) ein bezogen auf den Fahrzeugaufbau vorderer Lenker und der zweite Verdeckelementlenker (60) ein bezogen auf den Fahrzeugaufbau hinterer Lenker ist.

7. Faltverdeck nach einem der Ansprüche 1 bis 6, **dadurch gekennzeichnet, dass** der Hauptlenker (28) ein hinteres Rahmenteil des Verdecks umfasst.

8. Faltverdeck nach einem der Ansprüche 1 bis 7, **dadurch gekennzeichnet, dass** das vordere Verdeckelement (22) ein vorderes Rahmenteil des Verdecks umfasst.

## Claims

1. Folding top for a convertible, comprising a folding-top cloth (16) and a folding-top linkage (14) which is provided on both sides with a main link (28) which is mounted on a main bearing (26) and to which a frame part (38), which extends substantially in the longitudinal direction of the vehicle in the closed position of the top, and an intermediate link (44) are coupled, with a front, rigid folding-top element (22) being connected via a first folding-top element link (58) to the intermediate link (44) and via a second folding-top element link (60) to the frame part (38), **characterized in that** means are provided on the folding-top linkage (14), said means bringing about a continuous slowing-down of the front, rigid folding-top element (22) during the sequence of movement of the top from a storage position to the closed position, and which means are designed in such a manner that a guide link (48) is arranged between the frame part (38) and the intermediate link (44), and a coupling element (66) defined by at least two points of articulation (68, 70) is arranged between the intermediate link (44) or the guide link (48), on the one hand, and the first folding-top element link (58) or the second folding-top element link (60), on the other hand.

2. Folding top according to Claim 1, **characterized in that** the folding-top element (22) is a front bow which, in the closed position, is adjacent to A pillars of a vehicle body.

3. Folding top according to Claim 1, **characterized in that** the coupling element (66) is a link element, an eccentric element or the like.

4. Folding top according to Claim 1, **characterized in that** the coupling element (66) is arranged between the intermediate link (44) and one of the folding-top element links (58, 60).

5. Folding top according to one of Claims 1 to 4, **characterized in that** the frame part (38) is connected to a main pillar (30) mounted on the main bearing (26).

6. Folding top according to one of Claims 1 to 5, **characterized in that** the first folding-top element link (58) is a front link, with reference to the vehicle body, and the second folding-top element link (60) is a rear link, with reference to the vehicle body.

7. Folding top according to one of Claims 1 to 6, **characterized in that** the main link (28) comprises a rear frame part of the top.

8. Folding top according to one of Claims 1 to 7, **characterized in that** the front folding-top element (22) comprises a front frame part of the top.

## Revendications

1. Capote pliante pour un véhicule cabriolet, comprenant une toile de capote (16) et une tringlerie de capote (14), qui est pourvue de part et d'autre d'une bielle principale (28) montée sur un palier principal (26), sur laquelle sont articulées une pièce de cadre (38) s'étendant, en position de fermeture de la capote, essentiellement dans la direction longitudinale du véhicule, et une bielle intermédiaire (44), dans laquelle un élément de capote rigide antérieur (22) est relié à la bielle intermédiaire (44) par une première bielle d'élément de capote (58) et à la pièce de cadre (38) par une deuxième bielle d'élément de capote (60), **caractérisée en ce qu'**il est prévu sur la tringlerie de capote (14) des moyens qui provoquent un ralentissement continu de l'élément de capote rigide antérieur (22) au cours du mouvement de la capote d'une position de rangement à la position de fermeture et qui sont conçus de telle manière qu'une bielle de guidage (48) soit disposée entre la pièce de cadre (38) et la bielle intermédiaire (44) et qu'un élément de couplage (66) défini par au moins deux points d'articulation (68, 70) soit disposé entre la bielle intermédiaire (44) ou la bielle de guidage (48) d'une part et la première bielle d'élément de capote (58) ou la deuxième bielle d'élément de capote (60) d'autre part.

2. Capote pliante selon la revendication 1, **caractérisée en ce que** l'élément de capote (22) est un arceau antérieur qui, dans la position de fermeture, est adjacent à des colonnes A d'une superstructure du véhicule.

3. Capote pliante selon la revendication 1, **caractérisée en ce que** l'élément de couplage (66) est un élément de bielle, un élément d'excentrique ou analogue.

4. Capote pliante selon la revendication 1, **caractérisée en ce que** l'élément de couplage (66) est agencé entre la bielle intermédiaire (44) et une des bielles d'élément de capote (58, 60).

5. Capote pliante selon l'une quelconque des revendications 1 à 4, **caractérisée en ce que** la pièce de cadre (38) est reliée à une colonne principale (30) montée sur le palier principal (26).

6. Capote pliante selon l'une quelconque des revendications 1 à 5, **caractérisée en ce que** la première bielle d'élément de capote (58) est une bielle située en avant par rapport à la superstructure du véhicule et la deuxième bielle d'élément de capote (60) est une bielle située en arrière par rapport à la superstructure du véhicule.

7. Capote pliante selon l'une quelconque des revendications 1 à 6, **caractérisée en ce que** la bielle principale (28) comprend une pièce de cadre postérieure de la capote.

8. Capote pliante selon l'une quelconque des revendications 1 à 7, **caractérisée en ce que** l'élément de capote antérieur (22) comprend une pièce de cadre antérieure de la capote.
